# EUROPEAN PATENT APPLICATION

(11) **EP 4 760 863 A1**
(43) Date of publication of application: **17.06.2026**
(21) Application number: 25833322.8
(22) Date of filing: 27.06.2025
(51) Int. Cl.: H01M 10/44, H01M 4/66, H01M 10/04, H01M 50/562

(54) **BATTERY CELL AGING DEVICE AND BATTERY CELL AGING METHOD USING SAME**

(30) Priority: 01.07.2024 KR 20240086439; 18.02.2025 KR 20250020979
(71) Applicant: LG Energy Solution, Ltd., Seoul 07335 (KR)
(72) Inventor: LEE, Sang Jae, Daejeon 34122 (KR); KWON, Kyeong Keun, Daejeon 34122 (KR)
(74) Representative: Plasseraud IP
(86) International application number: PCT/KR2025/009124
(87) International publication number: WO 2026/010263

(57) **Abstract**

According to exemplary embodiments of the present disclosure, a battery cell aging device is provided. The battery cell aging device may comprise a plastic cover having an opening for inserting an electrode terminal; and a moisture supply layer within the plastic cover.

## Description

### [Technical Field]

The present disclosure relates to a battery cell aging device and a battery cell aging method using the same. This application claims the benefit of Korean Patent Application No. 10-2024-0086439, filed on July 1, 2024, and Korean Patent Application No. 10-2025-0020979, filed on February 18, 2025, the disclosures of which are incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the cruising range of battery electric vehicles (BEVs) has increased to levels comparable to fuel vehicles, the primary application of secondary batteries is shifting from mobile devices to mobility.

Secondary batteries are manufactured through electrode processes, assembly processes, and activation processes. In the electrode process, an electrode assembly comprising a positive electrode, a negative electrode, and a separator may be provided. In the assembly process, the electrode assembly and electrolyte may be embedded within a case. In the activation process, the assembled battery cell may undergo charging, discharging, and aging steps. Through the activation process, the battery cell may be activated and stabilized by electrical energy.

### [Summary]

### [Technical Problem]

The technical problem that the technical concept of the present disclosure seeks to solve is to provide a battery cell aging device capable of providing a battery cell with improved performance and reliability.

The technical problem that the technical concept of the present disclosure seeks to solve is to provide a battery cell aging method capable of providing a battery cell with improved performance and reliability.

### [Technical Solution]

According to exemplary embodiments of the present disclosure for solving the aforementioned problems, a battery cell aging device is provided. The battery cell aging device may comprise: a plastic cover comprising an opening for insertion of an electrode terminal; and a moisture supply layer within the plastic cover.
may further comprise an anti-oxidation layer on the moisture supply layer.

The anti-oxidation layer may comprise a transition metal.

The electrode terminal is connected to an electrode, the electrode comprises a first metal, the anti-oxidation layer comprises a second metal, and the second metal may have a lower standard reduction potential than that of the first metal.

The moisture supply layer may be interposed between the anti-oxidation layer and the plastic cover.

The electrode terminal is a negative terminal connected to a negative electrode, and the negative electrode may comprise a first metal.

The negative electrode may comprise a negative electrode current collector comprising the first metal, the first metal may comprise copper (Cu), and the anti-oxidation layer may comprise at least one selected from magnesium (Mg), aluminum (Al), and zinc (Zn).

The moisture supply layer may comprise hydrocolloid.

The plastic cover further comprises a first surface, a second surface, a third surface, and a fourth surface defining the opening, wherein the first surface and the third surface face each other, the second surface and the fourth surface face each other, and the moisture supply layer may be disposed on the first surface and the third surface.

The second surface and the fourth surface may comprise at least a portion on which the moisture supply layer is not disposed.
may further comprise an anti-oxidation layer on the moisture supply layer on the first surface and the third surface.

The area of the first surface may be larger than the area of the second surface.

According to exemplary embodiments of the present disclosure for solving the aforementioned problems, a battery cell aging method is provided. The battery cell aging method comprises: assembling a battery cell comprising an electrode assembly and an electrode terminal; injecting an electrolyte into the battery cell; pre-aging the battery cell; charging or discharging the battery cell; and aging the battery cell, wherein in the pre-aging step, the electrode terminal of the battery cell is covered by a battery cell aging device, wherein the battery cell aging device comprises a plastic cover comprising an opening for insertion of the electrode terminal and a moisture supply layer within the plastic cover.

The battery cell aging device may further comprise an anti-oxidation layer on the moisture supply layer.

### [Advantageous Effects]

According to exemplary embodiments of the present disclosure, a battery cell aging device comprising an anti-oxidation layer and a moisture supply layer may be provided. The anti-oxidation layer comprises a metal with higher reducibility than the electrodes of the battery cell, and the moisture supply layer supplies moisture to the anti-oxidation layer to promote its oxidation. This prevents the electrodes from oxidizing during the pre-aging stage. Consequently, the performance and reliability of the battery cell can be improved.

According to exemplary embodiments of the present disclosure, a battery cell aging method using a battery cell aging device comprising an anti-oxidation layer and a moisture supply layer may be provided. This prevents the electrodes from oxidizing during the pre-aging stage. Consequently, the performance and reliability of the battery cell may be improved.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a front view illustrating a battery cell aging device according to embodiments based on the technical concept of the present disclosure.
FIG. 2 is an exploded perspective view of a battery cell to illustrate the battery cell aging device according to embodiments based on the technical concept of the present disclosure.
FIG. 3 is a perspective view of the battery cell aging device according to embodiments based on the technical concept of the present disclosure.
FIG. 4 is a cross-sectional view along line I-I' of FIG. 3.
FIG. 5 is a cross-sectional view along line II-II' of FIG. 3.
FIG. 6 is a perspective view of a battery cell aging device according to other embodiments based on the technical concept of the present disclosure.
FIG. 7 is a cross-sectional view of a battery cell aging device according to other embodiments based on the technical concept of the present disclosure.
FIG. 8 is a flowchart illustrating a battery cell aging method using a battery cell aging device according to embodiments based on the technical concept of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

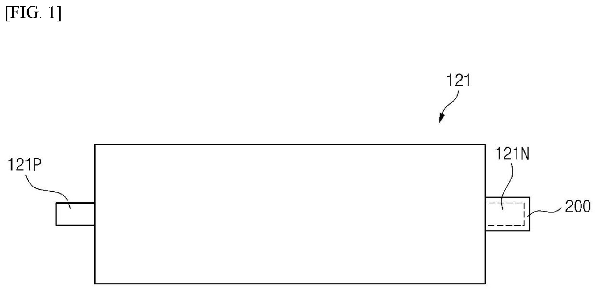

FIG. 1 is a front view illustrating a battery cell aging device 200 according to embodiments based on the technical concept of the present disclosure.

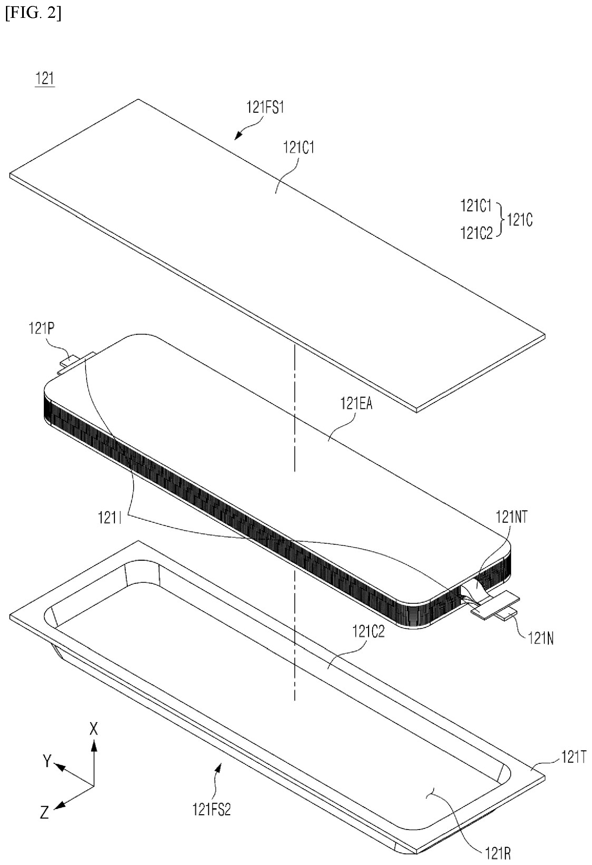

FIG. 2 is an exploded perspective view of a battery cell 121 to illustrate the battery cell aging device 200 according to embodiments based on the technical concept of the present disclosure.

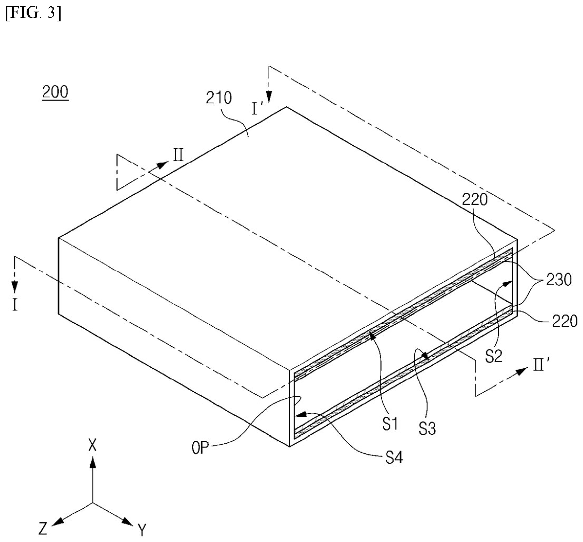

FIG. 3 is a perspective view of the battery cell aging device 200 according to embodiments based on the technical concept of the present disclosure.

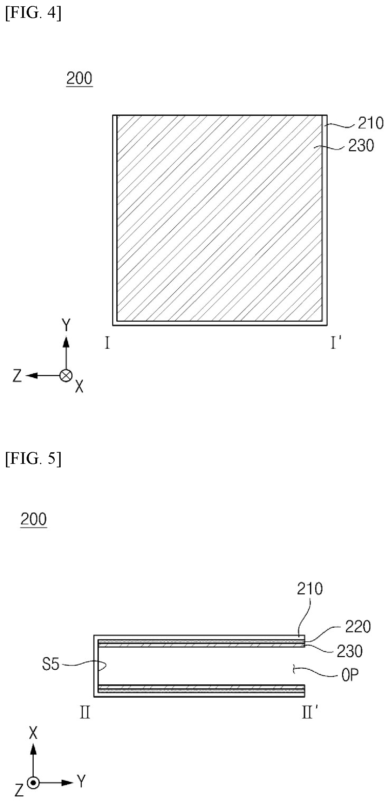

FIG. 4 is a cross-sectional view along line I-I' of FIG. 3.

FIG. 5 is a cross-sectional view along line II-II' of FIG. 3.

Referring to FIG. 1, a battery cell aging device 200 covering electrode terminals of a battery cell 121 may be provided.

Specifically, the battery cell 121 may comprise a positive terminal 121P and a negative terminal 121N. The battery cell aging device 200 may cover the negative terminal 121N of the battery cell 121.

Hereinafter, the battery cell 121 will be described in detail with reference to FIG. 2, and the battery cell aging device 200 will be described in detail with reference to FIGS. 3 through 5.

Referring to FIG. 2, the battery cell 121 may comprise a case 121C, an electrode assembly 121EA, a positive terminal 121P, and a negative terminal 121N. The battery cell 121 may further comprise an electrolyte.

According to exemplary embodiments, the battery cell 121 may comprise one of a cylindrical battery cell, a prismatic battery cell, and a pouch-type battery cell. The electrode assembly of a cylindrical battery cell is embedded within a cylindrical metal can. The electrode assembly of a prismatic battery cell is embedded within a prismatic metal can. The electrode assembly of a pouch-type battery cell is embedded within a pouch case comprising an aluminum laminate sheet. Hereinafter, the technical concept of the present disclosure is described based on an example where the battery cell 121 comprises a pouch-type battery cell. However, a person skilled in the art will readily arrive at examples where the battery cell 121 comprises either a cylindrical battery cell or a prismatic battery cell based on the description herein.

The electrode assembly 121EA may comprise a positive electrode, a negative electrode, and a separator interposed between the positive and negative electrodes. The electrode assembly 121EA may be either a jelly-roll type or a stack-type. The jelly-roll type electrode assembly 121EA may comprise a wound structure of a positive electrode, a negative electrode, and a separator interposed therebetween. The stack-type electrode assembly 121EA may comprise a plurality of positive electrodes, a plurality of negative electrodes, and a plurality of separators interposed therebetween, stacked sequentially. In this specification, the term "electrode" may refer to a positive electrode and/or a negative electrode. For example, the term "electrode" may refer to a negative electrode, a positive electrode, or both a positive electrode and a negative electrode. For example, the term "electrode" comprises a negative electrode, and descriptions in this specification regarding electrodes and electrode terminals may also apply to negative electrodes and negative terminals.

The positive electrode may comprise a positive electrode current collector and a positive electrode active material. The negative electrode may comprise a negative electrode current collector and a negative electrode active material.

The thickness of the positive electrode current collector may range from about 3 µm to about 500 µm. The positive electrode current collector may not cause chemical changes in the secondary battery ultimately manufactured and may have high conductivity. The positive electrode current collector may comprise, for example, stainless steel, aluminum, nickel, titanium, graphite, and aluminum. The positive electrode current collector may also comprise stainless steel surface-treated with carbon, nickel, titanium, silver, etc. The surface of the positive electrode current collector may comprise a micro-irregular structure to enhance the adhesion of the active material. The positive electrode current collector may have a shape such as a film, sheet, foil, net, porous material, foam, or nonwoven fabric.

The thickness of the negative electrode current collector may range from approximately 3 µm to approximately 500 µm. The negative electrode current collector may not induce chemical changes in the final manufactured secondary battery and may possess high conductivity. The negative electrode current collector may comprise copper, stainless steel, aluminum, nickel, titanium, graphite, and aluminum-cadmium alloys. The negative electrode current collector may also comprise stainless steel surface-treated with carbon, nickel, titanium, silver, etc. The surface of the negative electrode current collector may comprise a micro-irregular structure to enhance the adhesion of the active material. The negative electrode current collector may have a shape such as film, sheet, foil, net, porous material, foam, or nonwoven fabric.

The positive electrode active material is a substance capable of generating electrochemical reactions. The positive electrode active material may be a lithium transition metal oxide. The positive electrode active material may comprise, for example, a layered compound such as lithium cobalt oxide (LiCoO₂) and lithium nickel oxide (LiNiO₂), substituted with one or more transition metals, a lithium manganese oxide substituted with one or more transition metals, a lithium nickel-based oxide represented by the chemical formula LiNi_{1-y}M_{y}O₂(where M is any one of Co, Mn, Al, Cu, Fe, Mg, B, Cr, Zn, and Ga, and 0.01≤y≤0.7), a lithium nickel cobalt manganese composite oxide represented by the chemical formula Li_{1+z}Ni_{b}Mn_{c}Co_{1-(b+c+d)}M_{d}O₍₂₋ₑ₎Aₑ such as Li_{1+z}Ni_{1/3}Co_{1/3}Mn_{1/3}O₂ and Li_{1+z}Ni_{0.4}Mn_{0.4}Co_{0.2}O₂(where -0.5≤z≤0.5, 0.1≤b≤0.8, 0.1≤c≤0.8, 0≤d≤0.2, 0≤e≤0.2, b+c+d<1, and M is one of Al, Mg, Cr, Ti, Si, and Y, and A is one of F, P, and Cl), and an olivine-based lithium metal phosphate represented by the chemical formula Li₁₊ₓM_{1-y}M'_{y}PO_{4-z}X_{z} (where M is a transition metal, more specifically one of Fe, Mn, Co, and Ni; M' is one of Al, Mg, and Ti; X is one of F, S, and N; -0.5≤x≤+0.5; 0≤y≤0.5; and 0≤z≤0.1).

The negative electrode active material may comprise carbon, such as non-graphitized carbon or graphite-based carbon. The negative electrode active material may comprise, for example, metal composite oxides such as LiₓFe₂O₃(0≤x≤1), LixWO₂(0≤x≤1), and SnₓMe₁₋ₓMe'_{y}O_{z}(where Me is one of Mn, Fe, Pb, and Ge, and Me' is one of Al, B, P, Si, Group 1, 2, or 3 elements of the periodic table, and halogens, 0<x≤1, 1≤y≤3, and 1≤z≤8). The negative electrode active material may comprise, for example, lithium metal, lithium alloys, silicon-based alloys, and tin-based alloys. The negative electrode active material may comprise, for example, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, and other metal oxides. The negative electrode active material may comprise, for example, conductive polymers such as polyacetylene, Li-Co-Ni-based materials, etc.

In a stack-type electrode assembly 121EA, a plurality of positive electrodes and a plurality of negative electrodes may be arranged in a first direction (X-direction). In a stack-type electrode assembly 121EA, a plurality of positive electrodes and a plurality of negative electrodes may be stacked in the first direction (X-direction).

Each of the plurality of positive electrodes of the electrode assembly 121EA may comprise a positive tab (not shown). The positive tab (not shown) of each of the plurality of positive electrodes of the electrode assembly 121EA may be short-circuited to the positive terminal 121P. The positive tab (not shown) of each of the plurality of positive electrodes of the electrode assembly 121EA may be welded to the positive terminal 121P.

Each of the plurality of negative electrodes of the electrode assembly 121EA may comprise a negative tab 121NT. Each negative tab 121NT of the plurality of negative electrodes of the electrode assembly 121EA may be shorted to a negative terminal 121N. Each negative tab 121NT of the plurality of negative electrodes of the electrode assembly 121EA may be welded to a negative terminal 121N.

The case 121C may comprise an inner resin layer, a metal layer, and an outer resin layer. An adhesive and an anti-corrosion layer may further be provided between the inner resin layer and the metal layer, and between the outer resin layer and the metal layer.

The inner resin layer may have heat-sealability and may be referred to as a sealant layer. The inner resin layer enables sealing of the case 121C. The inner resin layer may comprise, for example, polyolefin-based resins such as polypropylene (PP) and polyethylene (PE). The metal layer may comprise any one of iron, an alloy of carbon, chromium, and manganese, an alloy of iron, chromium, and nickel, and aluminum. The metal layer may be a gas barrier. The metal layer may block the passage of gas through the case 121C. The outer resin layer may be a surface protective layer. The outer resin layer may comprise a material having abrasion resistance and heat resistance, such as a nylon resin.

The case 121C may be provided by joining a first case 121C1 and a second case 121C2. In this example, the first case 121C1 may be substantially flat. The first case 121C1 may not comprise an accommodating part. The second case 121C2 may comprise an accommodating part 121R. The accommodating part 121R may be formed by a pouch forming process. The accommodating part 121R is a portion of the second case 121C2 formed into a bowl shape for accommodating the electrode assembly 121EA. Unlike the illustration in FIG. 2, the first case 121C1 and the second case 121C2 may each comprise an accommodating part 121R formed by the pouch forming process.

The terrace 121T of the second case 121C2 may surround the accommodating part 121R. The terrace 121T of the second case 121C2 may be joined to the edge of the first case 121C1, thereby providing a case 121C.

The case 121C may have a roughly rectangular prism shape, and the first main surface 121FS1 and second main surface 121FS2 of the case 121C may be the widest surfaces of the case 121C. The first main surface 121FS1 and the second main surface 121FS2 may be substantially parallel to at least one of the electrode assembly 121EA or the plurality of positive electrodes and the plurality of negative electrodes comprised in the electrode assembly 121EA. The first main surface 121FS1 and the second main surface 121FS2 may be opposite each other. The first main surface 121FS1 and the second main surface 121FS2 may be substantially perpendicular to the first direction (X-direction), but are not limited thereto.

An insulating tape 1211 may be applied to the positive terminal 121P and the negative terminal 121N. The positive terminal 121P and the negative terminal 121N may protrude outside the case 121C. The positive terminal 121P and negative terminal 121N may protrude from the case 121C in a second horizontal direction (Y-direction). Accordingly, the resulting voltage and current of the battery cell 121 may be output through the positive terminal 121P and negative terminal 121N. The positive terminal 121P may be a positive lead. The negative terminal 121N may be a negative lead.

Hereinafter, the technical concept of the present disclosure will be explained with reference to an example wherein each of a plurality of battery cells 121 is a bidirectional cell, wherein the positive terminal 121P and negative terminal 121N of the battery cell 121 are formed on opposite sides of the case 121C. Based on the description herein, a person skilled in the art will readily appreciate that each of the plurality of battery cells 121 may be configured as a unidirectional cell. The positive terminal 121P and negative terminal 121N may be spaced apart in a second direction (Y-direction). The second direction (Y-direction) may be substantially parallel to each of the plurality of positive electrodes of the electrode assembly 121EA and each of the plurality of negative electrodes of the electrode assembly 121EA.

Referring to FIGS. 3 through 5 together, the battery cell aging device 200 may comprise a plastic cover 210 having an opening OP for insertion of electrode terminals. For example, the aforementioned negative terminal 121N may be inserted into the opening OP. The plastic cover 210 may comprise an insulating material. For example, the plastic cover 210 may comprise polyethylene or polypropylene, among others.

In some embodiments, the opening OP may be defined by first to fourth surfaces (S1 to S4). The first to fourth surfaces (S1 to S4) may be inner surfaces of the plastic cover 210. The first surface S1 and the third surface S3 may be parallel to each other. For example, the first surface S1 and the third surface S3 may face each other. The first surface S1 and the third surface S3 may extend in a second direction (Y-direction) and a third direction (Z-direction). The second surface S2 and the fourth surface S4 may be parallel to each other. The second surface S2 and the fourth surface S4 may extend in the first direction (X-direction) and the second direction (Y-direction). For example, the second surface S2 and the fourth surface S4 may face each other. The first surface S1 may meet the second surface S2 and the fourth surface S4. The third surface S3 may meet the second surface S2 and the fourth surface S4.

In some embodiments, the area of the first surface S1 and the third surface S3 may be larger than the area of the second surface S2 and the fourth surface S4.

As illustrated in FIGS. 3 through 5, the battery cell aging device 200 may further comprise a moisture supply layer 220 and an anti-oxidation layer 230 disposed within the plastic cover 210.

The moisture supply layer 220 may be disposed within an opening OP of the plastic cover 210. The moisture supply layer 220 may be disposed on some surfaces of the plastic cover 210. Specifically, the moisture supply layer 220 may be disposed on the first surface S1 and the third surface S3 of the plastic cover 210. In some embodiments, the moisture supply layer 220 may not be disposed on the second surface S2 and fourth surface S4 of the plastic cover 210. For example, the second surface S2 and fourth surface S4 may comprise at least a portion where the moisture supply layer 220 is not disposed.

The plastic cover 210 may further comprise a fifth surface S5 meeting the first to fourth surfaces (S1 toS4). The fifth surface S5 may extend in a first direction (X-direction) and a third direction (Z-direction). In some embodiments, the moisture supply layer 220 may not be disposed on the fifth surface S5. For example, the fifth surface S5 may comprise at least a portion where the moisture supply layer 220 is not disposed.

The anti-oxidation layer 230 may be disposed on the moisture supply layer 220 within the opening OP of the plastic cover 210. The anti-oxidation layer 230 may be provided on some surfaces of the plastic cover 210. Specifically, the anti-oxidation layer 230 may be provided on the first surface S1 and the third surface S3 of the plastic cover 210. In some embodiments, the anti-oxidation layer 230 may not be disposed on the second surface S2 and fourth surface S4 of the plastic cover 210. For example, the second surface S2 and fourth surface S4 may comprise at least a portion where the anti-oxidation layer 230 is not disposed. In some embodiments, the anti-oxidation layer 230 may not be disposed on the fifth surface S5. For example, the fifth surface S5 may comprise at least a portion where the anti-oxidation layer 230 is not disposed.

As illustrated in FIGS. 3 and 5, the moisture supply layer 220 may be interposed between the plastic cover 210 and the anti-oxidation layer 230. The moisture supply layer 220 may serve to supply moisture to the anti-oxidation layer 230 while the battery cell aging device 200 covers the electrode terminals of the battery cell 121. For example, the moisture supply layer 220 may comprise a hydrocolloid.

In some embodiments, the anti-oxidation layer 230 may contain a transition metal. Specifically, the anti-oxidation layer 230 may contain a transition metal having a standard reduction potential lower than that of the electrode to which the electrode terminal covered by the battery cell aging device 200 is connected.

Referring to FIGS. 1, 3 through 5 together, the battery cell aging device 200 may cover a negative terminal 121N connected to the negative electrode of a battery cell 121. For example, the negative electrode may contain a first metal. The negative electrode comprises a negative electrode current collector, and descriptions of the negative electrode herein may comprise descriptions of the negative electrode current collector. For example, the negative electrode current collector may contain the first metal. The anti-oxidation layer 230 may contain a second metal having a standard reduction potential lower than that of the first metal.

Specifically, the second metal contained in the anti-oxidation layer 230 may have a lower standard reduction potential than the first metal of the negative electrode, making it more reducible than the first metal. That is, the second metal may oxidize more readily than the first metal.

For example, the negative electrode may contain copper (Cu). For example, the negative electrode current collector may contain copper (Cu). The anti-oxidation layer 230 may contain a metal having a standard reduction potential lower than that of copper (Cu). For example, the anti-oxidation layer 230 may contain magnesium (Mg), aluminum (Al), or zinc (Zn).

In some embodiments, the battery cell aging device 200 according to embodiments based on the technical concept of the present disclosure may cover the electrode terminals of the battery cell 121, thereby preventing oxidation of the electrodes to which the electrode terminals are connected during the pre-aging process of the battery cell.

Specifically, during the pre-aging process of the battery cell 121, if the potential of the negative electrode current collector within the case 121C rises due to its exposure to the electrolyte, a deintercalation phenomenon or dendrite formation may occur, where the metal (e.g., the first metal) contained in the negative electrode current collector dissolves into the electrolyte. At this time, according to the battery cell aging device 200 of the embodiments based on the technical concept of the present disclosure, an anti-oxidation layer 230 containing a metal (e.g., the second metal) having a higher reducibility than a metal (e.g., the first metal) contained in the negative electrode current collector of the negative electrode can be oxidized, transferring electrons to the negative terminal 121N, and these electrons can be transferred to the negative current collector of the negative electrode connected to the negative terminal 121N within the case 121C. This prevents oxidation of the negative electrode. For example, oxidation of the negative electrode current collector can be prevented. Specifically, the moisture supply layer 220 can supply moisture to the anti-oxidation layer 230, thereby promoting oxidation of the anti-oxidation layer 230.

In the battery cell aging device 200 according to embodiments based on the technical concept of the present disclosure, the anti-oxidation layer 230 may contain a metal with higher reducibility than the electrode of the battery cell 121, thereby preventing oxidation of the electrode. For example, the anti-oxidation layer 230 may contain a metal with higher reducibility than the negative electrode of the battery cell 121, thereby preventing oxidation of the negative electrode. For example, the anti-oxidation layer 230 may comprise a metal with higher reducibility than the negative current collector of the battery cell 121, thereby preventing oxidation of the negative current collector.

In embodiments, the anti-oxidation layer 230 can oxidize and reduce the electrode, wherein the moisture supply layer 220 can supply moisture to the anti-oxidation layer 230 to promote oxidation of the anti-oxidation layer 230 and reduction of the electrode. For example, the moisture supply layer 220 can promote the reduction of the negative electrode. For example, the moisture supply layer 220 can promote the reduction of the negative electrode current collector.

According to embodiments of the present disclosure described with reference to FIGS. 1 to 5, a battery cell aging device 200 that covers the electrode terminals of a battery cell 121 and comprises anti-oxidation layer 230 and moisture supply layer 220 may be provided.

According to embodiments based on the technical concept of the present disclosure, a battery cell aging device 200 that can provide a battery cell 121 with improved performance and reliability may be provided.

### (Second embodiment)

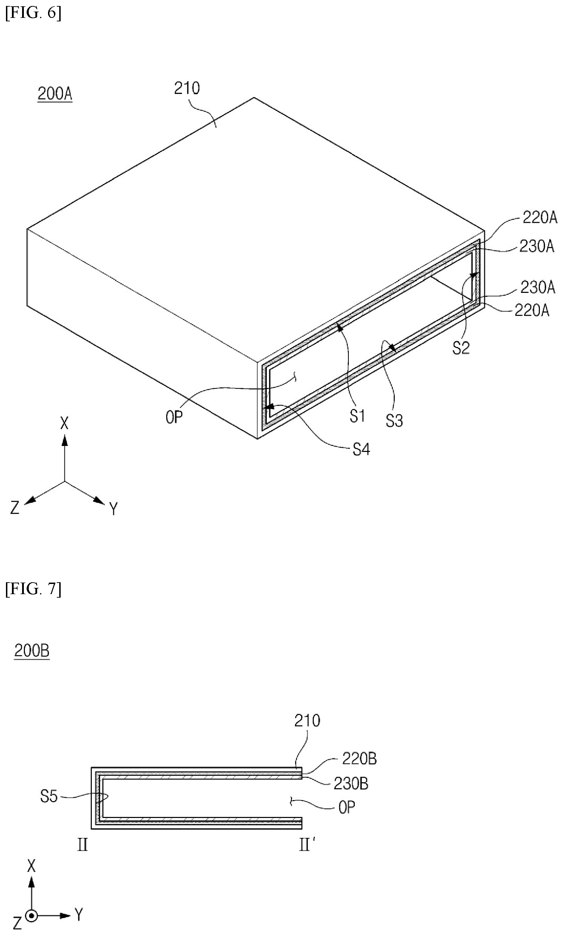

FIG. 6 is a perspective view of a battery cell aging device 200A according to other embodiments based on the technical concept of the present disclosure. Hereinafter, the description will focus primarily on the differences from the battery cell aging device 200 described with reference to FIGS. 1 through 5.

Referring to FIG. 6, the battery cell aging device 200A may comprise a plastic cover 210 having an opening OP for inserting electrode terminals, a moisture supply layer 220A disposed within the plastic cover 210, and an anti-oxidation layer 230A.

The opening OP may be defined by first to fourth surfaces (S1 to S4).

The moisture supply layer 220A may be disposed within the opening OP of the plastic cover 210. Specifically, the moisture supply layer 220A may be disposed on the first surface to fourth surface (S1 to S4) of the plastic cover 210.

The anti-oxidation layer 230A may be disposed on the moisture supply layer 220A, within the opening OP of the plastic cover 210. Specifically, the anti-oxidation layer 230A may be disposed on the first to fourth surfaces (S1 to S4) of the plastic cover 210.

As illustrated in FIG. 6, the moisture supply layer 220A may be interposed between the plastic cover 210 and the anti-oxidation layer 230A. The moisture supply layer 220A can serve to supply moisture to the anti-oxidation layer 230A while the battery cell aging device 200A covers the electrode terminals of the battery cell (210, see FIG. 1).

In some embodiments, the anti-oxidation layer 230A may contain a transition metal. Specifically, the anti-oxidation layer 230A may contain a transition metal having a standard reduction potential lower than that of the electrode to which the electrode terminal covered by the battery cell aging device 200A is connected.

According to embodiments based on the technical concept of the present disclosure, a battery cell aging device 200A that can provide a battery cell 121 with improved performance and reliability may be provided.

### (Third embodiment)

FIG. 7 is a cross-sectional view of a battery cell aging device 200B according to other embodiments based on the technical concept of the present disclosure. Specifically, FIG. 7 corresponds to the cross-section along line II-II' in FIG. 3. Hereinafter, the description will focus primarily on the differences from the battery cell aging device 200 described with reference to FIGS. 1 through 5.

Referring to FIG. 7, the battery cell aging device 200B may comprise a plastic cover 210 having an opening OP for inserting electrode terminals, a moisture supply layer 220B and an anti-oxidation layer 230B disposed within the plastic cover 210.

The moisture supply layer 220B may be disposed within the opening OP of the plastic cover 210. The moisture supply layer 220B may be disposed on some surfaces of the plastic cover 210. The anti-oxidation layer 230B may be disposed on the moisture supply layer 220B, within the opening OP of the plastic cover 210. The anti-oxidation layer 230B may be disposed on some surfaces of the plastic cover 210.

The opening OP of the plastic cover 210 may be defined by first to fourth surfaces (S1 to S4, see FIG. 3). The plastic cover 210 may further comprise a fifth surface S5 meeting the first to fourth surfaces (S1 to S4). The moisture supply layer 220B and the anti-oxidation layer 230B may also be disposed on the fifth surface S5.

As illustrated in FIG. 7, the moisture supply layer 220B may be interposed between the plastic cover 210 and the anti-oxidation layer 230B. The moisture supply layer 220B can serve to supply moisture to the anti-oxidation layer 230B while the battery cell aging device 200B covers the electrode terminals of the battery cell (210, see FIG. 1).

In some embodiments, the anti-oxidation layer 230B may contain a transition metal. Specifically, the anti-oxidation layer 230B may contain a transition metal having a standard reduction potential lower than that of the electrode to which the electrode terminal covered by the battery cell aging device 200B is connected.

According to embodiments based on the technical concept of the present disclosure, a battery cell aging device 200B that can provide a battery cell 121 with improved performance and reliability may be provided.

### (Fourth embodiment)

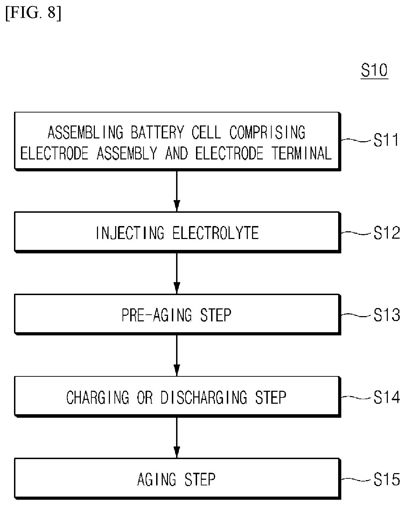

FIG. 8 is a flowchart illustrating a battery cell aging method S10 using a battery cell aging device (200, see FIG. 1) according to embodiments based on the technical concept of the present disclosure. Hereinafter, with reference to FIGS. 1 through 3 and FIG. 8 together, the battery cell aging method S10 using the battery cell aging device 200 will be described.

First, a step S11 of assembling a battery cell comprising an electrode assembly and an electrode terminal may be performed.

Specifically, a battery cell 121 as exemplified in FIGS. 1 and 2 may be assembled. The battery cell 121 may comprise an electrode assembly 121EA and electrode terminals. The electrode terminals may comprise, for example, a positive terminal 121P and/or a negative terminal 121N.

In the step of assembling the battery cell S11, an electrode process may be performed, comprising a mixing process, a coating process, a roll-pressing process, an optional slitting process, and a notching process. Subsequently, a process of embedding the electrode assembly 121EA into the case 121C may be performed.

Subsequently, an electrolyte injection step S12 may be performed. The electrolyte may be filled into the case 121C.

Subsequently, a pre-aging step S13 may be performed, waiting for the electrolyte to be impregnated into the battery cell. The key to the pre-aging process is to evenly distribute the electrolyte within the pouch cell so that it permeates uniformly into both the positive and negative electrodes. The pre-aging process may improve the mobility of lithium ions.

The pre-aging step S13 completes the electrical connection between the positive electrode and negative electrode before proceeding to the subsequent charging or discharging step S14. If the electrolyte wetting is insufficient, it can cause problems with the performance and reliability of the secondary battery, such as dendrite formation and capacity degradation during battery operation. To enhance electrolyte wetting, increasing the pre-aging temperature or extending the pre-aging time may be considered.

However, increasing the pre-aging temperature or duration as described above may cause problems such as oxidation of the electrode metal due to an increase in electrode potential caused by exposure to the electrolyte during the pre-aging process, and consequently, metal deintercalation or dendrite formation.

To address the above issues, in the battery cell aging method S10 according to embodiments based on the technical concept of the present disclosure, the electrode terminals of the battery cell 121 may be covered with the battery cell aging device 200 during the pre-aging step S14. For example, during the pre-aging step S14, the negative terminal 121N of the battery cell 121 may be covered by the battery cell aging device 200.

As described with reference to FIGS. 1 to 3, the battery cell aging device 200 may comprise the anti-oxidation layer 230 and the moisture supply layer 220. The anti-oxidation layer 230 may contain a metal more reducible than the electrodes of the battery cell 121, thereby preventing oxidation of the electrodes. For example, the battery cell aging device 200 may cover the negative terminal 121N of the battery cell 121, and the anti-oxidation layer 230 may contain a metal more reducible than the negative electrode connected to the negative terminal 121N, thereby preventing oxidation of the negative electrode. For example, the anti-oxidation layer 230 may comprise a metal with higher reducibility than the negative current collector connected to the negative terminal 121N, thereby preventing oxidation of the negative electrode current collector.

In the embodiments, the anti-oxidation layer 230 can oxidize and reduce the electrode, and the moisture supply layer 220 can supply moisture to the anti-oxidation layer 230 to promote the oxidation of the anti-oxidation layer 230 and the reduction of the electrode. For example, the moisture supply layer 220 may promote reduction of the negative electrode. For example, the moisture supply layer 220 may promote reduction of the negative electrode current collector.

Thus, a battery cell aging method S10 that can improve the performance and reliability of the battery cell 121 can be provided.

Following the pre-aging step S13, a charging or discharging step (S14) of the battery cell 121 may be performed.

While the battery cell 121 is being charged or discharged, it may be pressurized by a pressurization jig. Pressurizing the battery cell can prevent gas trapping and lithium plating, and enhance the uniformity of the SEI (Solid Electrolyte Interphase) film. A battery cell 121 comprising a uniform SEI film may have relatively short charging or discharging times.

The initial charge can form an SEI film on the negative electrode surface. The SEI is a thin film that forms on the negative electrode material surface during the first charge after manufacturing the battery cell 121. Charging the battery cell 121 causes lithium ions within the cell to migrate toward the negative electrode. During this process, chemical reactions occurring when substances in the electrolyte undergo initial electrolysis can generate an SEI film on the negative electrode material surface. The SEI can function as a type of separator. The SEI can prevent further decomposition reactions of the electrolyte during the process of lithium ions moving from the positive electrode to the negative electrode for battery charging.

Subsequently, a step S15 of aging the battery cell 121 may be performed.

During the aging process, the battery cell 121 may be stored at room temperature for a predetermined period to stabilize the charged or discharged battery cell 121.

According to embodiments of the present disclosure described with reference to FIGS. 1 through 3 and FIG. 8, a battery cell aging method S10 using a battery cell aging device 200 may be provided. The battery cell aging device 200 can cover the negative terminal of the battery cell 121 during the pre-aging step S14 to prevent oxidation of the negative electrode of the battery cell 121 connected thereto.

According to embodiments based on the technical concept of the present disclosure, a battery cell aging method S10 that can provide a battery cell 121 with improved performance and reliability may be provided

The present disclosure has been described in more detail above through the drawings and embodiments. However, the configurations described in the drawings or embodiments described herein are merely one embodiment of the present disclosure and do not represent all of the technical concepts of the present disclosure. Therefore, it should be understood that various equivalents and modifications may exist at the time of filing this application.

## Claims

1. A battery cell aging device comprising:
a plastic cover comprising an opening for insertion of an electrode terminal; and
a moisture supply layer within the plastic cover.

2. The battery cell aging device of claim 1, further comprising:
an anti-oxidation layer on the moisture supply layer.

3. The battery cell aging device of claim 2, wherein
the anti-oxidation layer comprises a transition metal.

4. The battery cell aging device of claim 3, wherein
the electrode terminal is connected to an electrode,
the electrode comprises a first metal,
the anti-oxidation layer comprises a second metal, and
the second metal has a lower standard reduction potential than that of the first metal.

5. The battery cell aging device of claim 2, wherein
the moisture supply layer is interposed between the anti-oxidation layer and the plastic cover.

6. The battery cell aging device of claim 2, wherein
the electrode terminal is a negative terminal connected to a negative electrode, and
the negative electrode comprises a first metal.

7. The battery cell aging device of claim 6, wherein
the negative electrode comprises a negative electrode current collector comprising the first metal,
the first metal comprises copper (Cu), and
the anti-oxidation layer comprises at least one selected from magnesium (Mg), aluminum (Al), and zinc (Zn).

8. The battery cell aging device of claim 1, wherein
the moisture supply layer comprises hydrocolloid.

9. The battery cell aging device of claim 1, wherein
the plastic cover further comprises a first surface, a second surface, a third surface, and a fourth surface defining the opening, wherein
the first surface and the third surface face each other,
the second surface and the fourth surface face each other, and
the moisture supply layer is disposed on the first surface and the third surface.

10. The battery cell aging device of claim 9, wherein
the second surface and the fourth surface comprise at least a portion on which the moisture supply layer is not disposed.

11. The battery cell aging device of claim 9, further comprising:
an anti-oxidation layer on the moisture supply layer on the first surface and the third surface.

12. The battery cell aging device of claim 9, wherein
the area of the first surface is larger than the area of the second surface.

13. A battery cell aging method comprising:
assembling a battery cell comprising an electrode assembly and an electrode terminal;
injecting an electrolyte into the battery cell;
pre-aging the battery cell;
charging or discharging the battery cell; and
aging the battery cell, wherein
in the pre-aging step, the electrode terminal of the battery cell is covered by a battery cell aging device, wherein
the battery cell aging device comprises a plastic cover comprising an opening for insertion of the electrode terminal and a moisture supply layer within the plastic cover.

14. The battery cell aging method of claim 13, wherein
the battery cell aging device further comprises an anti-oxidation layer on the moisture supply layer.
